# FASCICULE DE BREVET EUROPEEN

(11) **EP 0 978 194 B1**
(45) Date de publication et mention de la délivrance du brevet: **18.02.2004**
(21) Numéro de dépôt: 98921583.5
(22) Date de dépôt: 23.04.1998
(51) Int. Cl.: H04M 17/00, H04M 15/28, H04M 19/08, H04M 1/66

(54) **PROCEDE ET SYSTEME DE RADIO TELEPHONE MOBILE ET TERMINAL UTILISABLE DANS UN TEL SYSTEM**
MOBILES FUNKTELEFONSYSTEM UND -VERFAHREN UND DAZU VERWENDBARES ENDGERÄT
MOBILE RADIOTELEPHONE METHOD AND SYSTEM AND TERMINAL USED IN SUCH A SYSTEM

(30) Priorité: 25.04.1997 FR 9705144
(43) Date de publication de la demande: 09.02.2000
(73) Titulaire: FRANCE TELECOM, 75015 Paris (FR)
(72) Inventeur: BALBI, Dominique, F-92270 Bois-Colombes (FR)
(74) Mandataire: Loisel, Bertrand
(86) Numéro de dépôt international: PCT/FR1998/000810
(87) Numéro de publication internationale: WO 1998/049827

(56) Documents cités:
- WO-A-93/12583
- WO-A-93/20644
- WO-A-96/03001
- WO-A-96/16504
- US-A- 5 542 100

## Description

L'invention concerne la téléphonie mettant en oeuvre des terminaux mobiles et une infrastructure d'exploitation de réseau, généralement fixe mais pouvant comporter un relayage par satellites en orbite basse. Elle trouve une application particulièrement importante bien que non exclusive en téléphonie numérique.

Les systèmes existants de téléphonie cellulaire numérique, tels que le GSM et le DECT 1800, comportent un réseau ayant des stations de base capables de communiquer entre elles et avec des terminaux mobiles. dont la constitution est complexe pour des raisons de confidentialité, d'utilisation internationale et de sécurité de transmission. Ces systèmes exigent de l'utilisateur potentiel qu'il fasse une démarche dans des points de vente en nombre limité et souscrive un abonnement qui le lie pour une période généralement longue et ne prend fin que moyennant une résiliation. Ces contraintes dissuadent beaucoup de personnes qui n'ont besoin d'un téléphone mobile que pendant des périodes de temps très limitées, au cours desquelles il est peu fréquent qu'elles séjournent dans des endroits très distants les uns des autres. Ce même inconvénient existe pour les autres réseaux cellulaires et subsiste lors de la mise en oeuvre de la norme UMTS.

La vente de cartes à puce insérables, dans un terminal banalisé et contenant un nombre fixé d'unités prépayées n'apporte qu'une solution très partielle, car l'utilisateur doit disposer d'un terminal standard complexe ; de plus l'introduction de ces cartes a augmenté le nombre de vols de terminaux.

On connaît par ailleurs des téléphones cellulaires jetables (WO-A-96/03001).

L'invention vise essentiellement à fournir un procédé et un système de radio-téléphonie mobile donnant un accès immédiat au réseau dès l'achat d'un terminal, ayant un prix extrêmement réduit par elimination de la majeure partie des composants d'un terminal classique et permettant de téléphoner pendant une durée limitée, avec une commodité comparable à celle d'un téléphone cellulaire complexe, sans devoir rechercher un téléphone public.

Dans ce but l'invention propose notamment un procédé de radio téléphonie suivant la revendication 1.

Au cours de chaque appel depuis le terminal on incrémente le débit et on le compare au crédic ou on débite le crédit. Après épuisement du crédit, on rejette les appels provenant du terminal et/ou on invalide le terminal et on libère, éventuellement avec un délai, son numéro d'abonné.

L'invention propose également un système de radiotéléphonie numérique suivant la revendication 8.

L'invention propose enfin un terminal portable suivant la revendication 9 utilisable dans un système du genre ci-dessus défini. Le terminal comporte eventuellement, un crédit pre-enregistré, sous forme sécurisée. Il est toutefois plus commode que le crédit soit déduit par le réseau de l'identifiant qu'il recoic. L'identifiant sera conforme aux normes du réseau radio utilisé, par exemple celui à onze ou quinze chiffres actuellement prévu en GSM.

D'autres caractéristiques sont définies dans les sous-revendications.

Pour réduire le coût du terminal, il est possible de le munir d'un seul bouton, provoquant l'établissement de la liaison avec le centre d'appels par émission du numéro de ce dernier lorsque seuls les appels sont autorisés. Toutefois il est préférable de prévoir un ou des boutons permettant de placer le terminal à l'arrêt, en veille (pour la réception d'appels), en prise de ligne en réponse à un appel entrant, en prise de ligne en vue d'établir une communication.

L'écran habituel des téléphones cellulaires peut être omis, ce qui réduit également le prix. Mais un écran à cristaux liquides en noir et blanc ou couleurs peut être maintenu en vue de l'affichage d'indications fixes ou animées, pré-enregistrées, y compris de message publicitaire ou de jeux. pour créer un effet de gamme. Mais cet écran n'est pas destiné à afficher des informations de téléphonie.

L'invention trouve de nombreuses applications, car diverses circonstances rendent irremplaçable un téléphone mobile, sans pour autant justifier un abonnement ou alors que les conditions requises pour obtenir un abonnement ne sont pas remplies (personnes en déplacemenc par exemple).

On peut citer, à titre non limitatif, les enfants en déplacement occasionnel, notamment en congés scolaires, les personnes présentant des risques d'insolvabilité, ainsi que les cadres en déplacement craignant la panne, le vol, la perce ou l'oubli d'un téléphone mobile classique.

Les terminaux peuvent être commercialisés dans les grandes surfaces et bureaux de tabac avec un montant prépayé. qui peut s'accompagner de la contrainte de ne téléphoner que depuis ou dans le pays de vente. Pour réduire le prix de revient du terminal, le boîtier peut porter une publicité donc le bénéficiaire participe au financement.

Le numéro de téléphone attribué à l'acheteur, dont le maintien en validité est conditionné par un solde créditeur et/ou un délai de validité, lui permet d'être appelé, y compris de l'étranger, par le réseau auquel il est rattaché. Le terminal sera généralement non rechargeable, pour réduire les risques de fraude.

Le principe de fonctionnement peut mettre en oeuvre des moyens comparables à ceux utilisés pour les télécartes et pour le GSM, mais sous une forme très simplifiée, surtout dans le cas, le plus fréquent, où aucun rechargement n'est envisagé. Toutefois, et c'est là une différence essentielle, le débit du montant prépayé s'effectue au niveau du réseau à partir du crédit communiqué par le centre d'appel. Les terminaux sont invalidés après épuisement du crédit et/ou expiration d'un délai de validité, mais éventuellement collectés pour plusieurs utilisations successives de quelques composants tels que le vocodeur et la tête haute fréquence (comme dans le cas des appareils photographiques dits jetables). La gestion au niveau du centre d'appels et du centre de taxation est très simple et très souple. Le crédit initial peut être décrémenté progressivement et le solde indiqué à l'appelant par le centre d'appels à chaque nouvel appel. La consommation peut être déterminée au fur et à mesure de l'utilisation et comparée au crédit initial. La possibilité de recevoir des appels peut être maintenue par programmation du centre d'appels pour une durée déterminée après épuisement du crédit, éventuellement avec envoi d'un message indiquant l'épuisement.

Les opérations initiales de mise en service par attribution d'un numéro, puis l'établissement d'une communication sont faites grâce à un serveur vocal.

L'identifiant peut être mis en oeuvre de manière comparable à celle du GSM et calculé, à partir d'un numéro de série, de fabrication, etc... inaccessible de l'extérieur, par un algorithme tel que DES (data encryption standard), RSA (Rivest Shamir Adleman) ou à apport de connaissance nul.

Pour simplifier le terminal il est préférable d'éviter de transférer des données, autres que celles nécessaires à l'initialisation du terminal, à sa reconnaissance et à sa localisation dans le réseau cellulaire.

Le système peut utiliser l'infrastructure d'un réseau de radiotéléphonie cellulaire existant. Cette infrastructure comporte généralement des stations fixes affectées chacune à une cellule et des contrôleurs de stations de base qui gèrent toutes les cellules d'une région déterminée. Le mode d'établissement d'une liaison à l'initiative d'un terminal suivant l'invention avec la station de base appropriée peut être le même que pour les terminaux classiques, si ce n'est que le numéro d'appel autorisé pour le terminal est unique et provoque le routage vers un centre d'appels unique pouvant accéder au réseau général. Ce centre d'appels comporte des moyens d'accueil, de transmission d'appel vers le correspondant souhaité et de gestion des paiements. Les fonctions à remplir peuvent être résumées comme suit :

### Gestion des téléphones distribués

Les numéros de série ou de fabrication des téléphones (ou un autre identifiant) sont communiqués au centre d'appel soit dès leur mise en place dans les réseaux de vente, soit lors de la vente. Dans ce dernier cas, les conséquences du vol d'un lot de téléphones aptes à fonctionner, à leur sortie d'usine, disparaissent.

Divers moyens de contrôle sont utilisables pour réduire les fraudes. L'un consiste à enregistrer au centre d'appels les numéros de série ou de fabrication de tous les téléphones distribués (ainsi que le montant prépayé alloué s'il varie suivant le type d'appareil). Dès le premier appel depuis le terminal, le centre d'appels identifie le terminal par un échange mettant en oeuvre un algorithme de chiffrement interdisant par écoute de reconnaître le numéro. Ultérieurement, un contrôle du solde peut être effectué par les mêmes moyens pour vérifier la cohérence entre le montant comptabilisé et celui qui reste et qui est indiqué par le terminal, dans la mesure où ce dernier est prévu pour le faire.

Etant donné que les montants en jeu restent faibles, des algorithmes simples à apport de connaissance nulle sont utilisables. Toutefois, des algorithmes plus complexes tels que DES (Data Encrypton Standard) ou RSA sont utilisables.

### Gestion des paiements

La gestion peut s'effectuer par une opératrice, ce qui est la solution la plus simple à mettre en place, ou automatiquement avec des moyens de reconnaissance de parole et de synthèse de parole au centre d'appels.

Dans le premier cas, l'opératrice, lorsqu'elle établit la communication, peut indiquer au propriétaire du terminal le solde d'unités. Elle enclenche le mécanisme de taxation. Le réseau interrompt la communication si le solde devient nul, éventuellement après une indication sonore, et les données relatives au terminal sont effacées au centre d'appels à la fin de la période prédéfinie de validité. En fin de communication, le solde est mis à jour et peut également être inscrit dans le terminal. Il est indiqué à l'appelant: de façon vocale. Des contrôles de cohérence supplémentaires peuvent être implémentés (cohérence entre le type de montant alloué et la destination de l'appel...). Des règles d'apurement de fichier peuvent être prévues. En particulier, les terminaux peuvent être vendus avec l'indication d'une période de validité au-delà de laquelle les données relatives au terminal sont effacées par le centre d'appels. Pour éviter que le terminal périmé puisse être utilisé pour des appels qui échoueraient, mais encombreraient les stations de base. Le terminal peut être prévu pour que les moyens d'émision de la tête haute fréquence puisse être invalidés par un ordre émis par le réseau.

### Gestion des appels

Au premier appel (identifié par exemple par le fait qu'aucun numéro d'appel n'est encore associé à l'identifiant dans une base de données), un numéro est affecté, indiqué vocalement à l'acheteur et mémorisé. L'émission des appels par le centre, lorsqu'il recoit une demande, est une fonctionnalité classique, facile à réaliser par des moyens humains. Un échange vocal est aisé et rend au surplus inutile de munir le terminal d'un écran de visualisation, ce qui diminue le coût, l'encombrement et la consommation.

On peut également utiliser la synthèse vocale pour informer le possesseur du terminal et la reconnaissance de parole pour identifier le poste qu'il souhaite appeler et dont il épelle les numéros d'abonné. Un tel système de serveur vocal peut utiliser des moyens comparables à ceux déjà mis en oeuvre par France Télécom pour fournir des renseignements sur les spectacles dans diverses régions.

La gestion des appels est simple lorsque les terminaux sont vendus avec l'indication qu'ils n'autorisent que des appels nationaux, et cela uniquement dans une langue déterminée. Toutefois, le choix peut être laissé à l'utilisateur de s'adresser dans une langue autre que celle du pays de vente, en mettant en oeuvre l'une ou l'autre de plusieurs solutions, par exemple :
- accès sur le centre d'appel du pays de vente, suivi d'un renvoi sur une opératrice de la langue sélectionnée,
- sélection directe de la langue par l'acheteur au moment de l'initialisation du terminal jetable; un programme résidant au sein du terminal est alors prévu pour permettre à l'acheteur de sélectionner la langue et affecte au bouton d'appel prévu sur le terminal le numéro d'accès au centre ayant la langue choisie.

En cas de traitement automatique des appels, un même centre peut comporter des moyens d'analyse et de synthèse de parole en plusieurs langues.

La gestion par un seul centre par pays présente l'avantage de centraliser toutes les données en un seul lieu, où sont enregistrés les crédits et effectués les débits.

Dans un but de protection de l'environnement, il peut être prévu un remboursement partiel en cas de restitution et/ou une réduction du prix de vente lorsqu'un appareil épuisé est rapporté. Certains composants peuvent être réutilisés, chaque utilisation pouvant être indiquée par une indication portée sur le composant afin de le rejeter après un nombre donné d'emplois. L'alimentation peut être prévue par piles chimiques ou par cellules solaires. L'utilisation d'accumulateurs n'est en effet pas justifiée du fait de la courte durée de vie utile et de l'absence de rechargement en unités.

On décrira maintenant, à titre d'exemple non limitatif, une constitution possible de terminal de radio-téléphonie mobile conforme à l'invention. La description se réfère aux dessins qui l'accompagnent, dans lesquels:
- la figure 1 est une vue en perspective d'un terminal montrant les composants qui apparaissent sur la face avant ;
- la figure 2 montre un aspect possible de la partie basse de la face arrière ou avant, faisant apparaître un voyant d'état des piles;
- la figure 3 est un synoptique de principe ;
- la figure 4 montre une autre disposition possible des moyens de commutation.

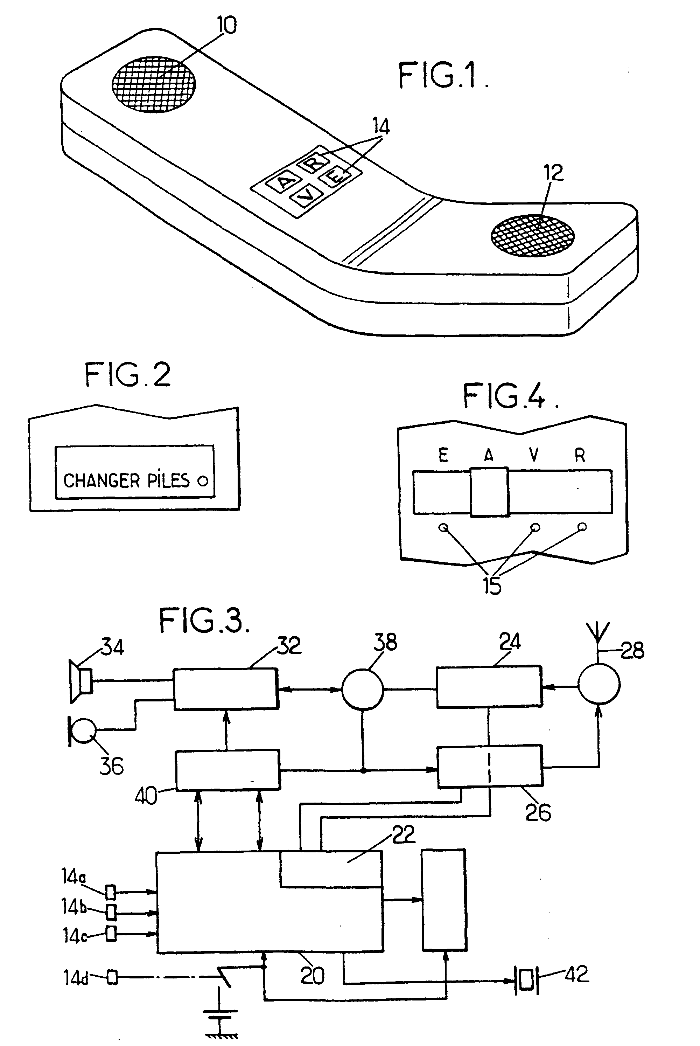

Le terminal portable montré en figure 1 comporte un boîtier en deux pièces emboîtées ou soudées l'une à l'autre. Sur la face avant apparaissent les fenêtres 10 destinée à l'écouteur et 12 destinée au microphone, ainsi qu'un jeu de quatre boutons 14, prévus pour qu'un seul puisse être enfoncé à la fois pour donner un état bien déterminé au terminal. En d'autres termes, chaque position enfoncée d'un bouton est exclusive de toutes les autres. Des diodes électroluminescentes 15 (LED) donnent des indications essentielles, par exemple l'état du poste (émission/réception ou réception uniquement). Dans le cas de la figure 1, chaque bouton peut comporter une LED, par exemple vue par transparence à travers le bouton.

La face arrière est munie d'un volet permettant de mettre en place des piles et d'une trappe de réception des piles. Une LED placée au dos peut donner l'état des piles (fig.2). Une tension insuffisante de ces dernières peut être indiquée par un changement de couleur ou un clignotement ou par un signal sonore. Une large plage peut être laissée disponible pour une inscription publicitaire. Le numéro de série de l'appareil, qui permettra de le suivre, peut être imprimé ou embossé sur la face arrière. Il peut comporter un numéro de série simple ou un numéro de série suivi de chiffres de vérification de son caractère authentique, lorsque le numéro de série doit être annoncé par l'utilisateur à un opérateur lors de la première mise en service.

Le terminal peut être vendu sous une enveloppe transparente scellée pouvant contenir également des piles.

Une étiquette peut être prévue pour que l'utilisateur puisse y inscrire le numéro temporaire d'appel, affecté lors de la mise en service.

Les boutons peuvent par exemple avoir les fonctions suivantes :
Arrêt A : lorsque ce bouton est enfoncé l'alimentation du terminal est coupé ; aucune émission ou réception n'est possible.
Veille V : cette position permet la réception d'appels. Dans cet état un programme mémorise et contrôle périodiquement que l'alimentation est suffisante, allume le voyant d'indication de tension et bascule le terminal en mode de réception, qui peut être celui prévu par le réseau adapté. Dans ce cas il y a automatiquement déroulement d'une séquence de mesure de champ pour rechercher une fréquence de réception, d'émission du signal sur une voie balise pour informer la station appropriée de la présence du terminal, de signalisation en cas de réception d'appel, de choix de la voie de dialogue, d'indication de station visuelle ou sonore en cas d'appel. Le terminal peut être prévu pour repasser en mode arrêt au bout d'un temps déterminé pour économiser les piles.
Réponse à appel R : cette position permet à l'utilisateur de prendre la ligne, s'il le souhaite, lorsqu'il reçoit un avertissement d'appel. L'actionnement de ce bouton met en fonctionnement le module vocodeur.
Prise de liane E : cette position permet l'émission d'appel avec connexion automatique au centre serveur par l'intermédiaire du réseau radio. De nouveau le programme contrôle périodiquement que l'alimentation est suffisante, pilote l'allumage du voyant indiquant que l'appareil est sous tension et fait basculer le terminal en mode d'émission d'appel. Il y a par exemple, lorsque le terminal est utilisé dans un système GSM, mesure de champs pour rechercher une fréquence d'émission, recherche d'une voie de balise pour permettre au réseau de localiser le terminal, signalisation (émission d'appel), choix de la voie de dialogue, transmission de la séquence d'identification du terminal (qui permettra au centre serveur d'initialiser le débit du compte ou de refuser l'appel en cas de perte, vol ou épuisement du crédit) déclenchement du module d'émission et déclenchement du vocodeur. Au niveau du système, il peut y avoir automatiquement routage sur un numéro de secours du centre serveur en cas d'occupation de ce dernier.

Etant donné que l'alimentation s'effectue par piles, dont l'autonomie est limitée, il peut être avantageux d'utiliser un module d'émission dont la puissance est réglable et de régler cette puissance en fonction de la proximité d'une borne relais, déterminée grâce à la mesure des champs.

Le synoptique du terminal peut être celui montré en figure 3. Il comporte alors un module de gestion 20 et un module 22 de réseau mobile, qui peuvent l'un et l'autre être des circuits intégrés actuellement disponibles sur le marché et destinés aux terminaux GSM ou des modules simplifiés. Ce module est relié à un récepteur 24 et à un émetteur 26, qui comportent l'un et l'autre un amplificateur et sont reliés à l'antenne 28. Cette antenne peut être directement imprimée sur la carte qui porte les circuits intégrés. Un vocodeur 32 fournit le signal audio de sortie à un écouteur 34 et reçoit le signal audio à traiter provenant d'un microphone 36. Il est relié par l'intermédiaire d'un circuit d'aiguillage 38 à l'émetteur et au récepteur. Les données nécessaires au fonctionnement sont stockées dans une mémoire 40.

Lorsque l'on recherche un coût minimum (ce qui sera fréquent), le terminal est démuni de moyens d'émission et de réception de données, autres que celles mentionnées plus haut, ce qui imposera des contraintes quant à l'initialisation du terminal à la première mise en service.

Le module de gestion est relié aux boutons de mise en veille 14a, de prise de ligne 14b, d'appel 14c et d'arrêt 14d. Le module de gestion est également relié à un composant d'avertissement d'appel 16 qui peut être une sonnerie 42.

Le système peut être prévu pour réduire le risque de vol ou du moins le rendre moins rentable. Deux types de vol sont à craindre, celui d'un lot complet de téléphones et le vol à l'arraché.

Une mesure consiste à affecter à chaque poste un numéro d'identification imprimé à l'arrière et qui devra être prononcé par l'acheteur à son premier appel. Ce numéro peut être codé à l'aide d'une clé secrète, de façon qu'un nombre donné au hasard ne respecte pas le code et qu'un nombre repris sur un autre téléphone soit identifié comme ayant déjà été affecté. Une autre solution consiste à informer le distributeur, par un envoi séparé, d'un mot qui devra être prononcé par l'acheteur.

Un téléphone individuel volé pourra être invalidé sur plainte du possesseur légitime en mettant le crédit à zéro.

## Revendications

1. Procédé de radiotéléphonie numérique mettant en oeuvre des terminaux portables et un réseau de radiotéléphonie cellulaire ayant au moins un centre d'appels, les terminaux portables étant affectés d'un crédit d'unités, fixé avant leur achat, et ayant des moyens d'appel permettant uniquement d'appeler un seul numéro d'appel qui est celui dudit centre d'appels, le procédé comprenant les étapes suivantes : au premier appel depuis un terminal portable, émission, par le terminal portable, d'un identifiant et transmission par synthèse vocale, du centre d'appels vers le terminal, d'un numéro d'abonné temporaire permettant l'appel dudit terminal par l'intermédiaire du réseau ; mémorisation de ce numéro au centre d'appels ; et, aux appels suivants depuis le terminal, effectués vers le centre d'appels uniquement, établissement par le centre d'appels de la communication demandée et débit du crédit d'unités par le centre d'appels.

2. Procédé selon la revendication 1, **caractérisé en ce que** le centre d'appels invalide le terminal lors de l'épuisement du crédit.

3. Procédé selon la revendication 1 ou 2, **caractérisé en ce qu'**on enregistre au centre d'appels, dès la fabrication ou la vente, un identifiant mémorisé dans le terminal et **en ce qu'**au premier appel un contrôle est effectué sur cet identifiant.

4. Procédé selon la revendication 1, **caractérisé en ce que**, après l'étape d'épuisement du crédit, on rejette, à partir du centre d'appels, les appels provenant du terminal.

5. Procédé selon la revendication 4, **caractérisé en ce qu'**on maintient la possibilité de recevoir des appels à partir du réseau pendant une durée déterminée après épuisement du crédit, puis on invalide le terminal et on libère son numéro d'abonné, à partir du centre d'appels.

6. Procédé selon l'une quelconque des revendications 1 à 5, **caractérisé en ce que** la communication demandée au centre d'appels est indiquée et identifiée par reconnaissance de parole.

7. Procédé selon l'une quelconque des revendications 1 à 6, **caractérisé en ce qu'**on fournit au possesseur du terminal portable, depuis le centre d'appels, son solde d'unités par synthèse vocale.

8. Système de radiotéléphonie numérique comportant un réseau de radiotéléphonie cellulaire ayant au moins un centre d'appels et ayant au moins un terminal portable dans lequel sont stockées des données d'identification et un seul numéro d'appel qui est celui d'un seul centre d'appels appartenant au réseau et dans chacun desquels sont prévus des moyens d'appel permettant d'appeler uniquement ledit numéro d'appel, ledit centre d'appels comportant des moyens d'identification des terminaux portables vendus ou fabriqués, des moyens de gestion des paiements par débit d'un compte initial affecté au terminal et des moyens de gestion et de routage des appels provenant du terminal portable, comportant un serveur vocal à synthèse de parole pour transmettre vers le terminal, un numéro d'abonné temporaire permettant l'appel dudit terminal par l'intermédiaire du réseau.

9. Terminal portable utilisable dans un système selon la revendication 8, comportant un vocodeur (32) relié à des moyens (24, 26) d'émission-réception de porteuse modulée numériquement par un signal de parole, une mémoire (40) préprogrammée, inaccessible en écriture contenant un identifiant, des moyens d'appel permettant uniquement d'appeler un seul numéro d'un centre d'appels unique ayant un numéro prédéfini et mémorisé dans le terminal, des moyens d'envoi de l'identifiant au centre d'appels et des moyens de réception d'un numéro d'abonné temporaire émis depuis le centre d'appel par synthèse vocale et permettant l'appel dudit terminal par l'intermédiaire du réseau.

10. Terminal selon la revendication 9, **caractérisé en ce qu'**il comporte un seul bouton d'appel provoquant l'émission du numéro prédéfini du centre d'appels unique.

11. Terminal selon la revendication 10, **caractérisé en ce que** le bouton d'appel comporte uniquement des positions d'arrêt, de veille et de prise de ligne en réception, en plus de la position d'émission d'appel.

## Patentansprüche

1. Verfahren zur digitalen Funktelefonie unter Benutzung tragbarer Endgeräte und eines zellularen Funktelefonnetzes mit wenigstens einer Rufzentrale, wobei die tragbaren Endgeräte mit einem vor ihrem Kauf festgelegten Guthaben an Einheiten versehen sind und Anrufmittel haben, die es lediglich erlauben, eine einzige Rufnummer anzurufen, welche diejenige der Rufzentrale ist, wobei das Verfahren die folgenden Schritte umfasst: beim ersten Anruf von einem tragbaren Endgerät aus Aussendung eines Kennzeichens durch das tragbare Endgerät und von der Rufzentrale zum Endgerät Übertragung durch Sprachsynthese einer zeitweiligen Teilnehmernummer, die den Anruf des Endgerätes über das Netz erlaubt; Speicherung dieser Nummer bei der Rufzentrale; und bei nachfolgenden Anrufen vom Endgerät aus, die einzig und allein zur Rufzentrale hin durchgeführt werden, Herstellung der angeforderten Verbindung durch die Rufzentrale und Belastung des Guthabens an Einheiten durch die Rufzentrale.

2. Verfahren nach Anspruch 1, **dadurch gekennzeichnet, dass** die Rufzentrale das Endgerät nach Ausschöpfung des Guthabens unwirksam macht.

3. Verfahren nach Anspruch 1 oder 2, **dadurch gekennzeichnet, dass** bei der Rufzentrale ab der Herstellung oder dem Verkauf ein im Endgerät gespeichertes Kennzeichen registriert wird und dass beim ersten Anruf eine Kontrolle über dieses Kennzeichen durchgeführt wird.

4. Verfahren nach Anspruch 1, **dadurch gekennzeichnet, dass** nach dem Schritt der Ausschöpfung des Guthabens, ausgehend von der Rufzentrale, die von diesem Endgerät stammenden Anrufe abgewiesen werden.

5. Verfahren nach Anspruch 4, **dadurch gekennzeichnet, dass** die Möglichkeit aufrecht erhalten wird, vom Netz ausgehende Anrufe während einer vorher festgelegten Dauer nach der Ausschöpfung des Guthabens zu empfangen, dann das Endgerät unwirksam gemacht wird und seine Teilnehmernummer, ausgehend von der Rufzentrale, freigegeben wird.

6. Verfahren nach einem der Ansprüche 1 bis 5, **dadurch gekennzeichnet, dass** die bei der Rufzentrale angeforderte Verbindung angezeigt und durch Spracherkennung identifiziert wird.

7. Verfahren nach einem der Ansprüche 1 bis 6, **dadurch gekennzeichnet, dass** dem Besitzer des tragbaren Endgerätes sein Saldo an Einheiten durch Sprachsynthese von der Rufzentrale aus geliefert wird.

8. System zur digitalen Funktelefonie, das ein zellulares Funktelefonnetz enthält, das wenigstens eine Rufzentrale und wenigstens ein tragbares Endgerät hat, in dem Identifizierungsdaten und eine einzige Rufnummer gespeichert sind, welche.diejenige einer einzigen, zum Netz gehörenden Rufzentrale ist, und bei denen jeweils Anrufmittel vorgesehen sind, die es erlauben, einzig und allein die erwähnte Rufnummer anzurufen, wobei diese Rufzentrale Identifizierungsmittel der verkauften oder hergestellten tragbaren Endgeräte, Mittel zur Verwaltung der Zahlungen durch Belastung eines beim Endgerät vorgesehenen Anfangskontos und Mittel zur Verwaltung und Leitweglenkung der vom tragbaren Endgerät stammenden Anrufe umfasst und einen Stimmserver zur Sprachsynthese enthält, um zum Endgerät eine zeitweilige Teilnehmernummer zu übertragen, die den Anruf des Endgerätes über das Netz erlaubt.

9. In einem System nach Anspruch 8 verwendbares tragbares Endgerät, umfassend einen Vocoder (32), der an Mittel (24, 26) zum Senden-Empfang eines durch ein Sprachsignal digital modulierten Trägers angeschlossen ist, einen vorprogrammierten, schreibunzugänglichen Speicher (40), der ein Kennzeichen enthält, Rufmittel, die einzig und allein das Anrufen einer einzigen Nummer einer einzigen Rufzentrale erlauben, die eine vorher festgelegte und im Endgerät gespeicherte Nummer hat, Mittel zum Abschicken des Kennzeichens an die Rufzentrale und Mittel zum Empfang einer zeitweiligen Teilnehmernummer, die von der Rufzentrale aus durch Stimmsynthese ausgesendet wird und den Anruf des Endgerätes über das Netz erlaubt.

10. Endgerät nach Anspruch 9, **dadurch gekennzeichnet, dass** es einen einzigen Rufknopf enthält, der die Aussendung der vorher festgelegten Nummer der einzigen Rufzentrale einleitet.

11. Endgerät nach Anspruch 10, **dadurch gekennzeichnet, dass** der Rufknopf zusätzlich zur Rufaussendungsstellung lediglich Stellungen zur Abschaltung, zur Bereitschaft (Standby) und zur Leitungsbelegung bei Empfang umfasst.

## Claims

1. A digital radio telephony method implementing portable terminals and a cellular radio telephony network having at least one call center, each portable terminal being given a credit of telephone charging units that is determined before said terminals are purchased, and each having means for calling enabling to call only a single call number that is the call number of the call center, the method comprising the following steps: on the first occasion a call is made from a portable terminal, the portable terminal transmits an identifier to the single call center and the call center transmits by voice synthesis a temporary subscriber number to the terminal, thereby enabling said terminal to be called via the network; said number is stored in the call center; and on subsequent calls from the terminal, made solely to the call center, the requested call is set up by the call center, and the credit of telephone charging units is debited by the call center.

2. A method according to claim 1, **characterized in that** when the credit has been used up, the call center invalidates the terminal.

3. A method according to claim 1 or 2, **characterized in that** during manufacture or sale, an identifier stored in the terminal is recorded at the call center, and **in that** on the first occasion a call is made, a check is performed on said identifier.

4. A method according to claim 1, **characterized in that** after the step in which credit has been exhausted, calls from the terminal are rejected by the call center.

5. A method according to claim 4, **characterized in that** the possibility remains of receiving calls from the network during a determined period of time after the credit has been exhausted, after which time the terminal is invalidated and its subscriber number is released by the call center.

6. A method according to any one of claims 1 to 5, **characterized in that** the call requested to the call center is indicated by voice and identified by voice recognition.

7. A method according to any one of claims 1 to 6 **characterized in that** the holder of the portable terminal is informed by the call center by voice synthesis of the balance remaining.

8. A digital radio telephony system comprising a cellular radio telephony network having at least one call center and having at least a portable terminal which stores identity data and a single call number which is the call number of a single call center belonging to the network and which is provided with means for calling enabling to call only the single call number, said center including means for identifying portable terminals that have been sold or manufactured, means for managing payments by debiting an initial account allocated to the terminal, and means for managing and routing calls from the portable terminal and including a vocal server for voice synthesis for transmission to the terminal of a temporary subscriber number thereby enabling said terminal to be called via the network.

9. A portable terminal used in a system according to claim 8, including a vocoder (32) connected to transceiver means (24, 26) using a digitally modulated carrier for transmitting and receiving a speech signal, a memory (40) that is preprogrammed and inaccessible in writing, the memory containing an identifier, means for calling enabling to call only a number of a single call center having a number that is predefined and stored in the terminal, and means for sending the identifier to the call center and means for receiving a temporary subscriber number transmitted from the call center by voice synthesis and thereby enabling said terminal to be called via the network.

10. A terminal according to claim 9, **characterized in that** it includes a single call button causing the predefined number of the single call center to be transmitted.

11. A terminal according to claim 10, **characterized in that** the call button includes only the off, standby, and answer mode positions, in addition to the make call position.
